# EUROPÄISCHE PATENTSCHRIFT

(11) **EP 2 056 125 B1**
(45) Veröffentlichungstag und Bekanntmachung des Hinweises auf die Patenterteilung: **14.12.2011**
(21) Anmeldenummer: 08017759.5
(22) Anmeldetag: 10.10.2008
(51) Int. Cl.: G01S 17/02

(54) **Sensor**
Sensor
Capteur

(30) Priorität: 31.10.2007 DE 102007051979
(43) Veröffentlichungstag der Anmeldung: 06.05.2009
(73) Patentinhaber: Leuze electronic GmbH + Co KG, 73277 Owen/Teck (DE)
(72) Erfinder: Klaus, Wolfgang, 73278 Schlierbach (DE); Ambos, Stefan, 72581 Dettingen (DE)
(74) Vertreter: Ruckh, Rainer Gerhard

(56) Entgegenhaltungen:
- DE-A1- 3 638 134
- DE-A1- 19 754 963
- US-A1- 2005 209 828
- US-B1- 6 211 784
- US-B1- 6 642 510

## Beschreibung

Die Erfindung betrifft einen Sensor gemäß dem Anspruch 1.

Derartige Sensoren dienen generell zur Erfassung von Objekten und können als optische Sensoren, Ultraschallsensoren und dergleichen ausgebildet sein.

Ein derartiger Sensor weist generell ein Sensorelement auf, mittels dessen Objekte detektiert werden können. Weiterhin ist bei dem Sensor eine Auswerteeinheit vorgesehen, in welcher die Ausgangssignale des Sensorelements ausgewertet werden. Dabei werden die Ausgangssignale mit einem oder mehreren Schaltschwellen bewertet, wodurch ein Objektfeststellungssignal generiert wird, welches angibt, ob ein Objekt, vorzugsweise in einem bestimmten Bereich, erkannt wird oder nicht.

Ein Beispiel für einen derartigen Sensor ist ein optischer Sensor in Form eines Lichttasters. Dieser Lichttaster weist als Sensorelement einen Sendelichtstrahlen emittierenden Sender und einen Empfangslichtstrahlen empfangenden Empfänger auf, welche an die Auswerteeinheit angeschlossen und mit dieser in einem gemeinsamen Gehäuse integriert sind.

Zur Detektion eines Objekts werden die vom Sender emittierten Sendelichtstrahlen auf das Objekt geführt. Die daran reflektierten Sendelichtstrahlen gelangen als Empfangslichtstrahlen zum Empfänger. Die Ausgangssignale des Sensorelements sind von den Empfangssignalen des Empfängers gebildet. Diese werden zur Generierung eines binären Objektfeststellungssignals mit einer Schaltschwelle bewertet. Diese Schaltschwelle definiert eine Tastweite, die einen Erfassungsbereich definiert. Je nachdem ob das aktuelle Empfangssignal unterhalb oder oberhalb der Schaltschwelle liegt, nimmt das Objektfeststellungssignal den Schaltzustand "Objekt im Erfassungsbereich erkannt" oder "freier Erfassungsbereich" an.

Die Festlegung der Schaltschwelle erfolgt bei derartigen Lichttastern in einem Einlernvorgang. Nach Aktivierung eines solchen Einlernvorgangs, beispielsweise durch Betätigung eines Bedienknopfs am Sensor, wird ein Objekt in der Tastweite, auf welche der Sensor eingestellt werden soll, relativ zum Sensor platziert. Dann wird das in der Tastweite angeordnete Objekt mittels der Sendelichtstrahlen abgetastet und so detektiert. Aus den hierbei registrierten Empfangssignalen am Ausgang des Empfängers wird dann die Schaltschwelle abgeleitet. Im einfachsten Fall wird der Pegel der registrierten Empfangssignale direkt als Schaltschwelle übernommen. Bevorzugt wird zum Pegelwert der Empfangssignale ein weiterer, in der Auswerteeinheit gespeicherter Wert, eine sogenannte Funktionsreserve addiert, wobei dann die so gebildete Summe als Schaltschwelle übernommen wird. Damit ist der Einlernvorgang beendet und der Betrieb des Sensors kann aufgenommen werden, wobei während der Betriebsphase zur Generierung des Objektfeststellungssignals die aktuell registrierten Empfangssignale mit der Schaltschwelle verglichen werden. Soll die Schaltschwelle geändert werden, muss von neuem ein Einlernvorgang durchgeführt werden. Dies ist mit einem beträchtlichen Zeitaufwand verbunden.

Die DE 197 54 963 A1 betrifft einen Reflexionslichttaster zum Erfassen von Objekten in einem Überwachungsbereich mit einem Sendelichtstrahlen emittierenden Sender und einem Empfangslichtstrahlen empfangenden Empfänger. Der Empfänger weist ein Nahelement und ein Femelement auf. Die Sendelichtstrahlen sind zur Einstellung der Tastweite auf ein Testobjekt gerichtet. Das Verhältnis der dabei generiertem Empfangssignale am Nah- und Fernelement wird mittels eines einstellbaren Widertandselements auf einem dem Schaltpunkt des Reflexionslichttasters entsprechenden wert selbstätig eingestellt. Der Einstellvorgang ist über eine extern betätigbare Signalleitung aktivierbar. Bei dem Reflexionslichttaster sind mehrere Tastweiten vorgesehen, deren Einstellung bei jeweils in unterschiedlicher Distanzen angeordneten Testobjekten erfolgt. Die Auswahl der Tastweiten erfolgt mittels einer Taste.

Aus der US 6,211,784 B1 ist ein Objektdetektor in Form eines optischen Sensors auf. Dieser weist einen Schalter für eine Betriebsartumschaltung auf.

Die US 6,642,510 B1 betrifft einen photoelektrischen Sensor, der einen Schalter zur Einstellung von Parametern aufweist. Der Schalter kann zwei Taster aufweisen, wobei eine Taste zur Erhöhung eines Einstellwerts und die andere zur Reduzierung des Einstellwerts dient.

Der Erfindung liegt die Aufgabe zugrunde, einen Sensor der eingangs genannten Art bereitzustellen, bei welchem mit geringem konstruktiven Aufwand einfach und schnell eine Paramtereinstellung durchführbar ist.

Zur Lösung dieser Aufgabe sind die Merkmale des Anspruchs 1 vorgegeben. Vorteilhafte Ausführungsformen und zweckmäßige Weiterbildungen der Erfindung sind in den Unteransprüchen beschrieben.

Der erfindungsgemäße Sensor umfasst ein Sensorelement und eine Auswerteeinheit, in welcher Ausgangssignale des Sensorelements zur Generierung von Objektfeststellungssignalen mit wenigstens einer Schaltschwelle bewertet werden. Als Einstellmittel ist eine Taste vorgesehen. In der Auswerteeinheit sind wenigstens zwei unterschiedliche Zeitfenster vorgegeben. Die wenigstens eine Schaltschwelle wird zu größeren Werten hin geändert, wenn die Dauer der Betätigung der Taste innerhalb eines ersten Zeitfensters liegt und die wenigstens eine Schaltschwelle zu kleineren Werten hin geändert wird, wenn die Dauer der Betätigung der Taste innerhalb des zweiten Zeitfensters liegt.

Bei dem erfindungsgemäßen Sensor können Schaltschwellen als Sensorparameter eingestellt werden, ohne dass hierzu ein Einlernvorgang durchgeführt werden muss. Gegenüber einer Schaltschwelleneinstellung über Einlernvorgänge kann bei dem erfindungsgemäßen Sensor die Paramtereinstellung einfacher und schneller durchgeführt werden.

Ein wesentlicher Vorteil der Erfindung besteht darin, dass sowohl eine Änderung der Schaltschwelle zu größeren Werten hin als auch eine Änderung der Schaltschwelle zu kleineren Werten hin mit derselben Taste durchgeführt werden kann. Generell können alle Einstellvorgänge mit ein und derselben Taste durchgeführt werden. Dadurch ergibt sich ein äußerst geringer konstruktiver Aufwand zur Ausbildung der Einstellmittel. Weiterhin bietet die bevorzugt an einer Außenwand des Sensors angeordnete Taste eine einfache und übersichtliche Bedienung und Handhabung für die jeweilige Bedienperson, die den Einstellvorgang vornimmt.

Generell ist die Bedienung der Taste so konzipiert, dass abhängig von der Dauer, wie lange die Taste betätigt, das heißt gedrückt wird, unterschiedliche Funktionalitäten der Parametereinstellung in der Auswerteeinheit des Sensors aktiviert werden.

Durch die erfindungsgemäße Definition des ersten und zweiten Zeitfensters wird, wenn eine Bedienperson die Taste drückt, in der Auswerteeinheit die Dauer der Betätigung ausgewertet und die Schaltschwelle wird erhöht oder reduziert, je nachdem in welches Zeitfenster die Dauer der Betätigung fällt.

Dabei liegt bevorzugt das zweite Zeitfenster bei größeren Zeiten, als das erste Zeitfenster. Damit wird, entsprechend dem subjektiven Befinden der Bedienperson die Schaltschwelle erhöht, wenn die Taste länger gedrückt wird und die Schaltschwelle reduziert, wenn die Taste kürzer gedrückt wird.

Vorteilhaft wird bei jeder Betätigung der Taste die Schaltschwelle um denselben Betrag geändert, das heißt die Schrittweite der Schaltschwellen-Änderung ist bei Erhöhen und Reduzieren der Schaltschwelle identisch. Durch mehrmaliges Tastendrücken kann mit den vorgegebenen Schritten so die Schaltschwelle sukzessiv erhöht oder reduziert werden. Da die Schrittweite für das Erhöhen und Reduzieren der Schaltschwelle identisch ist, kann eine vorgenommene Änderung durch mehrmaliges Erhöhen oder Reduzieren der Schaltschwelle durch eine entsprechende Anzahl von Änderungen in der entgegen gesetzten Richtung wieder aufgehoben werden.

Bei einem Sensor mit einer einzustellenden Schaltschwelle reichen die beiden Einstellfunktionen "Schaltschwelle erhöhen" und "Schaltschwelle reduzieren" aus.

Bei einem Sensor mit mehreren Schaltschwellen ist als zusätzliche Einstellfunktion eine Auswahl der einzustellenden Schaltschwellen möglich. Bei einem Sensor mit zwei einzustellenden Schaltschwellen sind neben dem ersten und zweiten Zeitfenster, welchen die Funktion der Schaltschwellen-Erhöhung beziehungsweise Schaltschwellen-Reduzierung zugeordnet ist, zusätzlich ein drittes und viertes Zeitfenster vorgesehen. Das dritte und vierte Zeitfenster schließen bevorzugt zu größeren Zeiten hin an das erste und zweite Zeitfenster an.

Zur Durchführung einer Schaltschwellen-Einstellung wird in diesem Fall durch längeres Drücken der Taste zunächst die Schaltschwelle ausgewählt, welche verändert werden soll. Dann erfolgt durch kürzeres Drücken der Taste die Veränderung der Schaltschwelle, wobei diese wieder jeweils erhöht oder reduziert wird, je nachdem ob die Dauer der Tastenbetätigung in das erste oder zweite Zeitfenster fällt.

Die Funktionalität der Parametereinstellung kann durch Definition weiterer Zeitfenster noch erweitert werden. Fällt die Dauer der Tastenbetätigung in ein solches, weiteres Zeitfenster, so können andere Einstellparameter ausgewählt und geändert werden. Beispiele für derartige zusätzliche Parameter bei optischen Sensoren ist eine Hell-Dunkelumschaltung. Weiterhin kann auch eine einstellbare Impulsverlängerung vorgesehen sein. Diese Funktion sieht bei sehr kurzen Objekteingriffen, also nur kurz anstehenden Sensorsignalen, die einer Objekterkennung entsprechen, eine Verlängerung des dadurch generierten Objektfeststellungssignals vor. Dies bedeutet, dass bei einem nur sehr kurzzeitig detektierten Objekt die dadurch generierte Objektmeldung für eine längere Zeit ansteht, damit diese in einer übergeordneten Einheit wie einer Steuerung überhaupt auswertbar ist.

Die erfindungsgemäße Schaltschwellen-Einstellung kann bei Sensoren unterschiedlicher Ausprägung eingesetzt werden, insbesondere bei optischen Sensoren oder Ultraschallsensoren.

Die Erfindung wird im Folgenden anhand der Zeichnungen erläutert. Es zeigen:
- Figur 1:: Schematische Darstellung eines optischen Sensors.
- Figur 2:: Darstellung von in der Auswerteeinheit des optischen Sensors gemäß Figur 1 vorgegebenen Zeitfenstern.

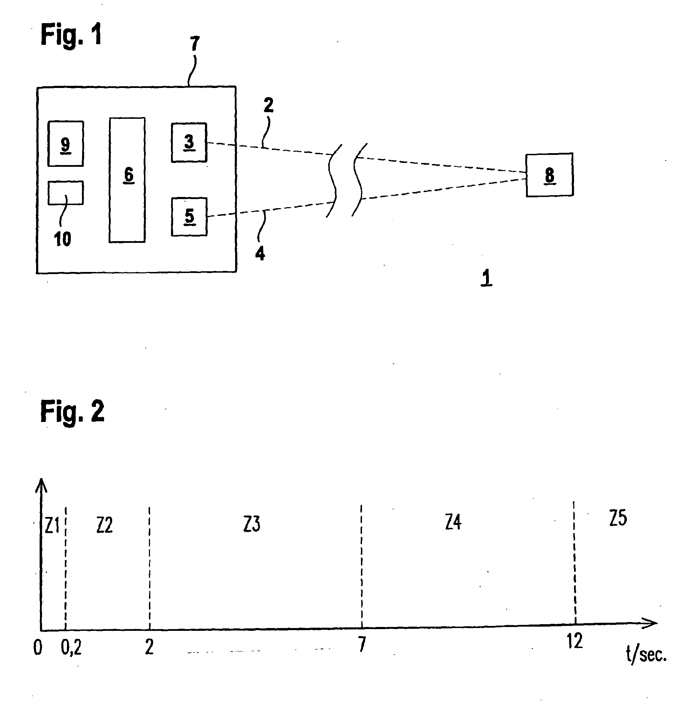

Figur 1 zeigt schematisch den Aufbau eines nach dem Lichttasterprinzip arbeitenden optischen Sensors 1. Der optische Sensor 1 umfasst als Sensorelement einen Sendelichtstrahlen 2 emittierenden Sender 3 und einen Empfangslichtstrahlen 4 empfangenden Empfänger 5. Der Sender 3 kann von einer Leuchtdiode oder Laserdiode gebildet sein. Der Empfänger 5 besteht im einfachsten Fall aus einer Photodiode. Der Sender 3 und der Empfänger 5 sind an eine Auswerteeinheit 6 angeschlossen, die von einem Mikroprozessor oder dergleichen gebildet ist. Die Auswerteeinheit 6 dient zur Ansteuerung des Senders 3 und zur Auswertung der Empfangssignale des Empfängers 5. Die Komponenten des optischen Sensors 1 sind in einem Gehäuse 7 untergebracht.

Zur Objektdetektion werden die vom Sender 3 emittierten Sendelichtstrahlen 2 durch ein nicht dargestelltes Fenster geführt und gelangen so in einen Überwachungsbereich. Die von einem Objekt 8 reflektierten Sendelichtstrahlen 2 werden als Empfangslichtstrahlen 4 durch das Fenster zum Empfänger 5 geführt.

Zur Generierung eines Objektfeststellungssignals werden die dadurch generierten Empfangssignale des Empfängers 5 mit zwei Schaltschwellen bewertet. Mit den Schaltschwellen werden im einfachsten Fall Amplitudenwerte der Empfangssignale bewertet. Bei einem als Distanzsensor ausgebildeten Sensorelement können als Empfangssignale des Empfängers 5 auch Distanzwerte mit den Schaltschwellen bewertet werden.

Das durch die Bewertung der Empfangssignale mit den Schaltschwellen erhaltene Objektfeststellungssignal gibt generell an, ob sich ein Objekt 8 innerhalb eines bestimmten Erfassungsbereichs als Teilbereich des Überwachungsbereichs befindet oder nicht. Die Schaltschwellen definieren die Grenzen des Erfassungsbereichs und bilden damit sogenannte Tastweiten. Das Objektfeststellungssignal wird über einen nicht dargestellten Schaltausgang ausgegeben.

Zur Durchführung einer Einstellung der Schaltschwellen oder generell zur Einstellung von Parametern ist an der Außenseite des Gehäuses 7 eine Taste 9 angeordnet, so dass sie von einer Bedienperson betätigt werden kann. Der Taste 9 ist ein Anzeigeelement 10 in Form einer Leuchtdiode zugeordnet. Die Taste 9 und das Anzeigeelement 10 sind an die Auswerteeinheit 6 angeschlossen und werden von dieser gesteuert. Mit dem Anzeigeelement 10 wird der Bedienperson generell angezeigt, ob eine Tastenbedienung in der Auswerteeinheit 6 registriert wurde.

Mit der Taste 9 können unterschiedliche Einstellfunktionen generiert und durchgeführt werden, indem diese Taste 9 unterschiedlich lang betätigt, das heißt gedrückt wird. Die Dauer der Betätigung der Taste 9 wird in der Auswerteeinheit 6 erfasst und ausgewertet. Abhängig hiervon wird in der Auswerteeinheit 6 eine bestimmte Einstellfunktion durchgeführt.

Diese Auswertung ist in Figur 2 veranschaulicht. Die in der Auswerteeinheit 6 registrierte Dauer der Betätigung der Taste 9 wird dahingehend geprüft, ob sie in eines der in Figur 2 dargestellten Zeitfenster Z1 - Z5 fällt. Das Zeitfenster Z1 ist vom Zeitintervall 0 < t ≤ 0,2s gebildet. Das Zeitfenster Z2 ist vom Zeitintervall 0,2s < t < 2s gebildet. Das Zeitfenster Z3 ist vom Zeitintervall 2s < t ≤ 7s gebildet. Das Zeitfenster Z4 ist vom Zeitintervall 7s < t ≤ 12s gebildet. Das Zeitfenster Z5 ist vom Zeitintervall t > 12s gebildet.

Den Zeitfenstern Z2 - Z4 sind in der Auswerteeinheit 6 Einstellfunktionen zur Einstellung der Schaltschwellen zugeordnet. Dem Zeitfenster Z5 sind Zusatzfunktionen wie eine Hell-Dunkel-Umschaltung des optischen Sensors 1 oder dergleichen zugeordnet.

Zur Durchführung einer Schaltschwellen-Einstellung wird in einem ersten Schritt die einzustellende Schaltschwelle ausgewählt. Soll eine erste Schaltschwelle ausgewählt werden, wird die Taste 9 so lange gedrückt, dass die Dauer der Tastenbetätigung im Zeitfenster Z3 liegt. Wird eine solche in Z3 liegende Betätigungsdauer in der Auswerteeinheit 6 registriert, wird durch die Auswerteeinheit 6 die erste Schaltschwelle zur Einstellung aktiviert. Entsprechendes gilt für die Aktivierung der zweiten Schaltschwelle, wobei hier die Dauer der Tastenbetätigung im Zeitfenster Z4 liegen muss.

Nach erfolgter Auswahl der Schaltschwellen wird deren Wert durch weitere Tastenbetätigungen verändert. Wird dabei einmalig die Taste 9 so lange gedrückt, dass die Dauer der Tastenbetätigung in das erste Zeitfenster Z1 fällt, so wird der Ausgangswert S₀ der Schaltschwelle um einen Betrag ΔS reduziert. Liegt dagegen die Dauer der Tastenbestätigung im Zeitfenster Z2, so wird der Ausgangswert S₀ der Schaltschwelle um denselben Betrag ΔS erhöht. Dabei beträgt der Wert von ΔS weniger als 5% des in der Auswerteeinheit 6 vorgegebenen Ausgangswerts S₀ der Schaltschwelle. Der Betrag ΔS, der die Schrittwerte zur Verstellung der Schaltschwellen in positiver und negativer Richtung bildet, ist ebenfalls in der Auswerteeinheit 6 abgespeichert.

Soll der Wert der Schaltschwellen von dem Ausgangswert S₀ auf den Wert S₀ + n · ΔS erhöht werden, so muss die Taste 9 n-mal gedrückt werden und zwar jedes Mal so lange, dass die Dauer der Tastenbetätigung im Zeitfenster Z2 liegt.

Entsprechendes gilt für eine Reduzierung des Werts der Schaltschwellen von S₀ - n · ΔS. Hier muss die Taste 9 n-mal so betätigt werden, dass jedes Mal die Dauer der Tastenbetätigung im Zeitfenster Z2 liegt.

### Bezugszeichenliste

- (1): Optischer Sensor
- (2): Sendelichtstrahlen
- (3): Sender
- (4): Empfangslichtstrahlen
- (5): Empfänger
- (6): Auswerteeinheit
- (7): Gehäuse
- (8): Objekt
- (9): Taste
- (10): Anzeigeelement

## Patentansprüche

1. Sensor mit einem Sensorelement und einer Auswerteeinheit, in welcher Ausgangssignale des Sensorelements zur Generierung von Objektfeststellungssignalen mit wenigstens einer Schaltschwelle bewertet werden, **dadurch gekennzeichnet, dass** als Einstellmittel eine Taste (9) vorgesehen ist, dass in der Auswerteeinheit (6) wenigstens zwei unterschiedliche Zeitfenster vorgegeben sind, wobei die wenigstens eine Schaltschwelle zu größeren Werten hin geändert wird, wenn die Dauer der Betätigung der Taste (9) innerhalb eines ersten Zeitfensters liegt, und wobei die wenigstens eine Schaltschwelle zu kleineren Werten hin geändert wird, wenn die Dauer der Betätigung der Taste (9) innerhalb des zweiten Zeitfensters liegt.

2. Sensor nach Anspruch 1, **dadurch gekennzeichnet, dass** bei einer einmaligen Betätigung der Taste (9) mit einer Betätigungsdauer, welche im ersten oder zweiten Zeitfenster liegt, die wenigstens eine Schaltschwelle jeweils um denselben Betrag geändert wird.

3. Sensor nach einem der Ansprüche 1 oder 2, **dadurch gekennzeichnet, dass** das erste Zeitfenster durch ein Zeitintervall zwischen 0,2 s und 2 s definiert ist.

4. Sensor nach einem der Ansprüche 1 bis 3, **dadurch gekennzeichnet, dass** die untere Grenze des ersten Zeitfensters die Obergrenze des zweiten Zeitfensters bildet.

5. Sensor nach einem der Ansprüche 1 bis 4, **dadurch gekennzeichnet, dass** mittels der Taste (9) zwei Schaltschwellen einstellbar sind.

6. Sensor nach Anspruch 5, **dadurch gekennzeichnet, dass** durch Betätigen der Taste (9) mit unterschiedlicher Dauer die erste oder zweite Schaltschwelle zur Einstellung auswählbar ist.

7. Sensor nach Anspruch 6, **dadurch gekennzeichnet, dass** in der Auswerteeinheit (6) ein drittes und viertes Zeitfenster vorgegeben sind, wobei die erstes Schaltschwelle zur Einstellung ausgewählt wird, wenn die Dauer der Betätigung der Taste (9) innerhalb des dritten Zeitfensters liegt, und wobei die zweite Schaltschwelle zur Einstellung ausgewählt wird, wenn die Dauer der Betätigung der Taste (9) innerhalb des vierten Zeitfensters liegt.

8. Sensor nach Anspruch 7, **dadurch gekennzeichnet, dass** das dritte Zeitfenster durch ein Zeitintervall zwischen 2 s und 7 s definiert ist.

9. Sensor nach einem der Ansprüche 7 oder 8, **dadurch gekennzeichnet, dass** das vierte Zeitfenster durch ein Zeitintervall zwischen 7 s und 12 s definiert ist.

10. Sensor nach Anspruch 9, **dadurch gekennzeichnet, dass** bei einer Betätigung der Taste (9) mit einer Dauer, die oberhalb der Obergrenze des vierten Zeitfensters liegt, Zusatzfunktionen des Sensors (1) einstellbar sind.

11. Sensor nach einem der Ansprüche 1 bis 10, **dadurch gekennzeichnet, dass** dieser wenigstens ein Gehäuse (7) aufweist, an dessen Außenseite die Taste (9) angeordnet ist.

12. Sensor nach einem der Ansprüche 1 bis 11, **dadurch gekennzeichnet, dass** dieser ein Anzeigeelement (10) aufweist, mittels dessen angezeigt wird,
ob eine Bedienung der Taste (9) in der Auswerteeinheit (6) registriert wurde.

13. Sensor nach Anspruch 12, **dadurch gekennzeichnet, dass** das Anzeigeelement (10) von einer Leuchtdiode gebildet ist.

14. Sensor nach einem der Ansprüche 1 bis 13, **dadurch gekennzeichnet, dass** dieser ein optischer Sensor (1) oder ein Ultraschallsensor ist.

## Claims

1. Sensor with a sensor element and an evaluating unit, in which output signals of the sensor element are evaluated by at least one switching threshold in order to generate object detection signals, **characterised in that** a button (9) is provided as setting means, that at least two different time windows are preset in the evaluating unit (6), wherein the at least one switching threshold is changed in the direction of greater values if the duration of the actuation of the button (9) lies within a first time window and wherein the at least one switching threshold is changed in the direction of smaller values if the duration of the actuation of the button (9) lies within the second time window.

2. Sensor according to claim 1, **characterised in that** in the case of a single actuation of the button (9) with an actuation duration lying in the first or second time window the at least one switching threshold is changed each time by the same amount.

3. Sensor according to one of claims 1 and 2, **characterised in that** the first time window is defined by a time interval between 0.2 seconds and 2 seconds.

4. Sensor according to any one of claims 1 to 3, **characterised in that** the lower boundary of the first time window forms the upper boundary of the second time window.

5. Sensor according to any one of claims 1 to 4, **characterised in that** two switching thresholds are settable by means of the button (9).

6. Sensor according to claim 5, **characterised in that**, for setting, the first or second switching threshold is selectable by actuation of the button (9) with different duration.

7. Sensor according to claim 6, **characterised in that** a third time window and a fourth time window are preset in the evaluating unit (6), wherein the first switching threshold is selected for setting when the duration of the actuation of the button (9) lies within the third time window and wherein the second switching threshold is selected for setting when the duration of the actuation of the button (9) lies within the fourth time window.

8. Sensor according to claim 7, **characterised in that** the third time window is defined by a time interval between 2 seconds and 7 seconds.

9. Sensor according to one of claims 7 and 8 **characterised in that** the fourth third time window is defined by a time interval between 7 seconds and 12 seconds.

10. Sensor according to claim 9, **characterised in that** in the case of an actuation of the button (9) with a duration lying above the upper boundary of the fourth time window additional functions of the sensor (1) are settable.

11. Sensor according to any one of claims 1 to 10, **characterised in that** this comprises at least one housing (7), at the outer side of which the button (9) is arranged.

12. Sensor according to any one of claims 1 to 11, **characterised in that** this comprises a display element (10), by means of which it is indicated whether an operation of the button (9) was registered in the evaluating unit (6).

13. Sensor according to claim 12, **characterised in that** the indicating element (10) is formed by a light-emitting diode.

14. Sensor according to any one of claims 1 to 13, **characterised in that** this is an optical sensor (1) or an ultrasonic sensor.

## Revendications

1. Capteur comprenant un élément capteur et une unité d'évaluation dans laquelle des signaux de sortie de l'élément capteur sont évalués à l'aide d'au moins un seuil de commutation pour générer des signaux de détection d'objet, **caractérisé en ce qu'**une touche (9) est prévue comme moyen de réglage, qu'au moins deux fenêtres de temps différentes sont prédéfinies dans l'unité d'évaluation (6), ledit au moins un seuil de commutation étant modifié vers des valeurs plus grandes quand la durée d'actionnement de la touche (9) se situe à l'intérieur d'une première fenêtre de temps, et ledit au moins un seuil de commutation étant modifié vers des valeurs plus petites quand la durée d'actionnement de la touche (9) se situe à l'intérieur de la deuxième fenêtre de temps.

2. Capteur selon la revendication 1, **caractérisé en ce que** lorsque la touche (9) est actionnée une seule fois avec une durée d'actionnement qui se situe dans la première ou la deuxième fenêtre de temps, ledit au moins un seuil de commutation est modifiée à chaque fois de la même valeur.

3. Capteur selon une des revendications 1 ou 2, **caractérisé en ce que** la première fenêtre de temps est définie par un intervalle de temps compris entre 0,2 s et 2 s.

4. Capteur selon une des revendications 1 à 3, **caractérisé en ce que** la limite inférieure de la première fenêtre de temps forme la limite supérieure de la deuxième fenêtre de temps.

5. Capteur selon une des revendications 1 à 4, **caractérisé en ce que** deux seuils de commutation sont réglables au moyen de la touche (9).

6. Capteur selon la revendication 5, **caractérisé en ce que** le premier ou le deuxième seuil de commutation peut être sélectionné pour réglage en actionnant la touche (9) pendant une durée différente.

7. Capteur selon la revendication 6, **caractérisé en ce qu'**une troisième et une quatrième fenêtres de temps sont prédéfinies dans l'unité d'évaluation (6), le premier seuil de commutation étant sélectionné pour réglage quand la durée d'actionnement de la touche (9) se situe à l'intérieur de la troisième fenêtre de temps, le deuxième seuil de commutation étant sélectionné pour réglage quand la durée d'actionnement de la touche (9) se situe à l'intérieur de la quatrième fenêtre de temps.

8. Capteur selon la revendication 7, **caractérisé en ce que** la troisième fenêtre de temps est définie par un intervalle de temps compris entre 2 s et 7 s.

9. Capteur selon une des revendications 7 ou 8, **caractérisé en ce que** la quatrième fenêtre de temps est définie par un intervalle de temps compris entre 7 s et 12 s.

10. Capteur selon la revendication 9, **caractérisé en ce que** des fonctions supplémentaires du capteur (1) sont réglables quand la touche (9) est actionnée pendant une durée qui se situe au-dessus de la limite supérieure de la quatrième fenêtre de temps.

11. Capteur selon une des revendications 1 à 10, **caractérisé en ce que** celui-ci présente au moins un boîtier (7) sur le côté extérieur duquel est disposée la touche (9).

12. Capteur selon une des revendications 1 à 11, **caractérisé en ce que** celui-ci présente un élément d'affichage (10) au moyen duquel est affiché si une utilisation de la touche (9) a été enregistrée dans l'unité d'évaluation (6).

13. Capteur selon la revendication 12, **caractérisé en ce que** l'élément d'affichage (10) est formé par une diode électroluminescente.

14. Capteur selon une des revendications 1 à 13, **caractérisé en ce que** celui-ci est un capteur optique (1) ou un capteur ultrasonore.
